# EUROPEAN PATENT APPLICATION

(11) **EP 2 579 548 A1**
(43) Date of publication of application: **10.04.2013**
(21) Application number: 11821363.6
(22) Date of filing: 31.03.2011
(51) Int. Cl.: H04M 1/00, G06F 3/041, G06F 3/048, G06F 3/14

(54) **MOBILE TERMINAL AND DISPLAY CONTROL METHOD FOR SAME**

(30) Priority: 03.09.2010 JP 2010197802
(71) Applicant: NEC Corporation, Tokyo 108-8001 (JP)
(72) Inventor: TOMIMORI, Hiroyuki, Tokyo 108-8001 (JP)
(74) Representative: Vossius & Partner
(86) International application number: PCT/JP2011/058208
(87) International publication number: WO 2012/029345

(57) **Abstract**

The present invention is applied to a portable terminal having two housings that are foldably connected to each other. The portable terminal according to the present invention includes two display means provided respectively on said two housings; touch panel type input means that detects touching of each of said two display means; a particular button located on one of said two display means; and control means that decides, when the flick operation for said particular button is performed, the application that is targeted by the flick operation, from among two applications that are executed on display screens of said two display means respectively, according to the direction of the flick operation, and executes a process assigned to the operation for said particular button on the decided application.

## Description

### TECHNICAL FIELD

The present invention relates to a portable terminal having two housings that are foldably connected to each other and also to a display control method for the portable terminal.

### BACKGROUND ART

Some portable terminals need to meet the regulation that a portable terminal supports particular buttons in view of standardization. That is to say, when a particular button provided on such a portable terminal is operated, the portable terminal needs to execute a process assigned to the particular button.

Such particular buttons include, for example, a Home button that returns any application operating state to the home screen, a Back button that causes the portable terminal to return to the immediately preceding screen or application, and a Menu button that causes the menu screen of applications (menu screen for options) to appear.

Some recent portable terminals include so-called two-screen type terminals in which two housings each having a display screen are foldably connected to each other.

Unlike a one-screen type terminal, a two-screen type terminal can simultaneously execute two applications on the respective display screens or one application on two display screens. When the portable terminal simultaneously executes two applications, particular buttons might be operated for individual applications.

Thus, to support particular buttons for a two-screen type terminal, they need to be operated for each application executed on the two display screens.

For example, as a technique in which the two-screen type terminal supports the particular buttons, when the two-screen type terminal simultaneously executes two applications, before an operation of a particular button is performed, the point of focus might be switched to a target application.

However, when the point of focus is switched to a target application on the two-screen type terminal, the following problems might arise.
(1) When a particular button is operated on the two-screen type terminal, an extra operation that switches the point of focus to a target application is needed as compared with an ordinary one-screen type terminal.
(2) A mechanism that indicates what application becomes the point of focused is needed.
(3) The user who uses the portable terminal is not easy to understand the concept of a point of focus.

To solve the foregoing problems, particular buttons can be located on the respective two display units using the technique disclosed in Patent Literature 1.

However, if particular buttons are located on the respective two display units of the two-screen type terminal, the following problems will arise.
(4) The load imposed on the hardware increases.
(5) Since particular buttons that are located on the respective two display units need to be operated, the user senses that it is difficult to perform the single-hand operation that is an advantage of the two-screen type terminal.

### RELATED ART LITERATURE

### PATENT LITERATURE

Patent Literature 1: JP2006-087108A, publication

### SUMMARY OF THE INVENTION

### PROBLEM TO BE SOLVED BY THE INVENTION

As described above, it has become an important issue to allow operations for particular buttons to applications executed on two display screens of the two-screen type terminal to be performed without locating these buttons on the respective two display units and without switching the point of focus to a target application.

Therefore, an object of the present invention is to provide a portable terminal that can solve the foregoing problems and also a display control method for the portable terminal.

### MEANS THAT SOLVE THE PROBLEM

A portable terminal according to the present invention is a portable terminal having two housings that are foldably connected to each other, comprising:
two display means provided respectively on said two housings;
touch panel type input means that detects touching of each of said two display means;
a particular button located on one of said two display means; and
control means that decides, when the flick operation for said particular button is performed, the application that is targeted by the flick operation, from among two applications that are executed on display screens of said two display means respectively, according to the direction of the flick operation, and executes a process assigned to the operation for said particular button on the decided application.

A display control method according to the present invention is a display control method for a portable terminal having two display means provided respectively on two housings that are foldably connected to each other, comprising;
providing touch panel type input means that detects touching of each of said two display means and locating a particular button at one of said two display means;
deciding, when the flick operation for said particular button is performed, the application that is targeted by the flick operation, from among two applications that are executed on display screens of said two display means respectively, according to the direction of the flick operation; and
executing a process assigned to the operation for said particular button on the decided application.

### EFFECT OF THE INVENTION

The portable terminal according to the present invention has an effect in which operations for particular buttons corresponding to applications executed on two display screens of the portable terminal can be performed without locating these buttons on the respective two display units and without switching the point of focus to a target application.

### BRIEF DESCRIPTION OF DRAWINGS

Fig. 1 is an external view showing a portable terminal according to an exemplary embodiment of the present invention.
Fig. 2 is a functional block diagram of the portable terminal shown in Fig. 1.
Fig. 3 is a schematic diagram describing a flick operation that is performed on the portable terminal shown in Fig. 1.

### BEST MODES THAT CARRY OUT THE INVENTION

Next, with reference to the accompanying drawings, an exemplary embodiment of the present invention will be described.

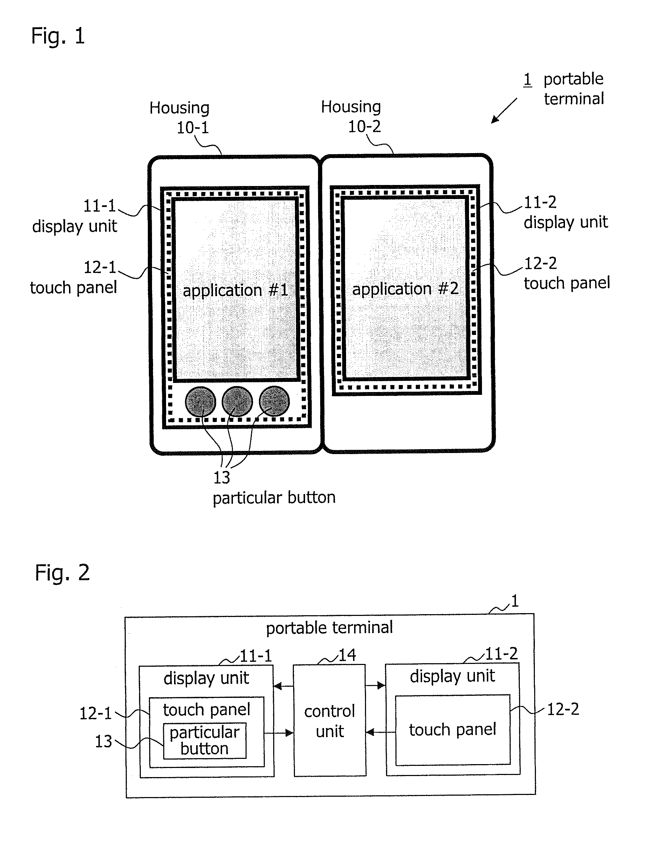

Fig. 1 is an external view showing portable terminal 1 according to an exemplary embodiment of the present invention.

Referring to Fig. 1, portable terminal 1 according to this exemplary embodiment is a two-screen type terminal having two housings 10-1 and 10-2 that are foldably connected to each other by a hinge mechanism or the like.

Housing 10-1 is provided with display unit 11-1 and touch panel (touch panel type input means) 12-1 that detects touching of display unit 11-1.

Housing 10-2 is provided with display unit 11-2 and touch panel (touch panel type input means) 12-2 that detects touching of display unit 11-2.

Three particular buttons 13 are located on display unit 11-1. Three particular buttons 13 are, for example, the foregoing Home button, Back button, and Menu button. In this exemplary embodiment, as shown in Fig. 1, particular buttons 13 are located on a lower position of display unit 11-1. Alternatively, particular buttons 13 may be located on display unit 11-2 or at any position of display unit 11-1 or 11-2. Further alternatively, the positions of particular buttons 13 may be switched to display unit 11-1 or 11-2 depending on software that is executed.

Fig. 2 is a functional block diagram of portable terminal 1 shown in Fig. 1.

Referring to Fig. 2, portable terminal 1 according to this exemplary embodiment has display unit 11-1 on which particular buttons 13 are located; display unit 11-2; touch panels 12-1 and 12-2; and control unit 14. In Fig. 2, three particular buttons 13 shown in Fig. 1 are depicted as one particular button 13.

Control unit 14 executes various processes according to operations on touch panels 12-1 and 12-2.

For example, control unit 14 executes applications on the display screens of display units 11-1 and 11-2 according to operations on touch panels 12-1 and 12-2. For example, in Fig. 1, while control unit 14 executes application #1 on the display screen of display unit 11-1, control unit 14 executes application #2 on the display screen of display unit 11-2.

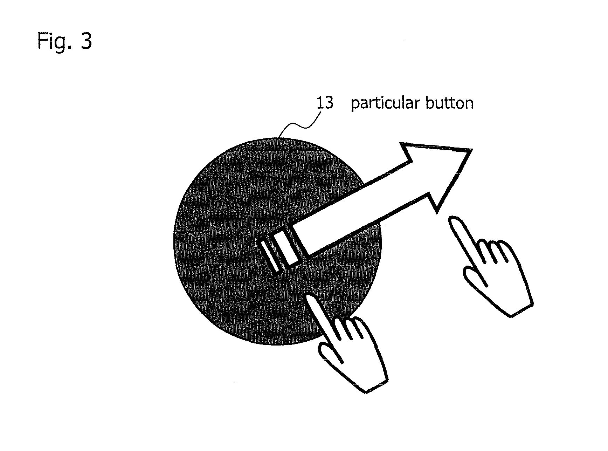

When a flick operation as shown in Fig. 3 is performed on particular button 13 located on touch panel 12-1, control unit 14 decides the application that is targeted by the flick operation, from among two applications that are executed on display screens of display units 11-1 and 11-2 respectively, according to the direction of the flick operation.

At this point, control unit 14 can decide a display screen based on any method. For example, while applications #1 and #2 are simultaneously executed respectively on the display screens of display units 11-1 and 11-2, if the flick operation is performed in the right direction, control unit 14 might decide that the operation is performed for an application executed on the display screen of display unit 11-2. If the flick operation is performed in another direction, control unit 14 might decide that the operation is performed on an application executed on the display screen of display unit 11-1. Unlike the state shown in Fig. 1, if the flick operation is performed on particular button 13 in a predetermined direction while one application is executed on the display screens of two display units 11-1 and 11-2, control unit 14 might decide that the operation is performed for this application. Also, if the flick operation is performed on particular button 13 in any direction while one application is executed on the display screens of two display units 11-1 and 11-2, control unit 14 might decide that the operation is performed for this application.

In addition, control unit 14 executes a process assigned to an operation for particular button 13 for an application that is decided according to the direction of the flick operation performed on particular button 13.

At this point, if any operation is not performed on particular button 13 in a predetermined period before or after the flick operation is performed on particular buttons 13, control unit 14 executes a process assigned to a single tap operation for particular button 13 on the foregoing decided application.

If any processes have been assigned to a double-click operation and a long press operation for particular button 13, control unit 14 can handle these operations as follows.

If a single tap operation is performed on particular button 13 in a predetermined period before or after the flick operation is performed on particular button 13, control unit 14 executes a process assigned to a double click operation for particular button 13 on the forgoing decided application.

If a long press operation is performed on particular button 13 in a predetermined period before or after the flick operation is performed on particular button 13, control unit 14 executes a process assigned to the long press operation on particular button 13 on the forgoing decided application. It should be appreciated that the flick operation performed after the long press operation for particular button 13 is performed includes a flick operation performed while the long press operation is performed and a flick operation performed after the long press operation is performed and the finger is released from particular button 13.

In this exemplary embodiment, as described above, when the flick operation is performed on particular button 13, control unit 14 decides the application that is targeted by the flick operation, from among two applications that are executed on display screens of display units 11-1 and 11-2 respectively, according to the direction of the flick operation and executes a process assigned to particular button 13 on the decided application.

Thus, one action of the flick operation for particular button 13 allows a display screen to be selected and an operation for particular button 13 to be performed for an application executed on the selected display screen.

Thus, operations for particular buttons corresponding to applications executed on two display screens of the two-screen type terminal can be performed without locating these buttons on the respective two display units and without switching the point of focus to a target application.

Thus, this exemplary embodiment has the following effects compared with the structure in which the point of focus is switched to a target application.
(1) When a particular button is operated, an extra operation that switches the point of focus to a target application is not needed.
(2) A mechanism that indicates what application becomes the point of focus is not needed.
(3) The user who uses the portable terminal does not need to understand the concept of a point of focus.

In addition, this exemplary embodiment has the following effects compared with the structure in which particular buttons are located on respective two display units 11-1 and 11-2.
(4) The load imposed on hardware can be deceased.
(5) The user can operate the portable terminal with one of his or her hands.

The present invention has been described with reference to the exemplary embodiments. However, it should be understood by those skilled in the art that the structure and details of the present invention may be changed in various manners without departing from the scope of the present invention.

The present application claims priority based on Japanese Patent Application JP 2010-197802 filed on September 3, 2010, the entire contents of which are incorporated herein by reference in its entirety.

## Claims

1. A portable terminal having two housings that are foldably connected to each other, comprising:
two display means provided respectively on said two housings;
touch panel type input means that detects a touching of each of said two display means;
a particular button located on one of said two display means; and
control means that decides, when the flick operation for said particular button is performed, the application that is targeted by the flick operation, from among two applications that are executed on display screens of said two display means respectively, according to the direction of the flick operation, and executes a process assigned to the operation for said particular button on the decided application.

2. The portable terminal as set forth in claim 1,
wherein said control means executes a process assigned to a single tap operation for said particular button on said decided application if any operation for said particular button is not performed in a predetermined period before or after the flick operation for said particular button is performed.

3. The portable terminal as set forth in claim 1 or 2,
wherein said control means executes a process assigned to a double click operation for said particular button on said decided application if a single tap operation for said particular button is performed in a predetermined period before or after the flick operation for said particular button is performed.

4. The portable terminal as set forth in any one of claim 1 to 3,
wherein said control means executes a process assigned to a long press operation for said particular button on said decided application if the long press operation for said particular button is performed in a predetermined period before or after the flick operation for said particular button is performed.

5. A display control method for a portable terminal having two display means provided respectively on two housings that are foldably connected to each other, comprising;
providing touch panel type input means that detects touching of each of said two display means and locating a particular button at one of said two display means;
deciding, when the flick operation for said particular button is performed, the application that is targeted by the flick operation, from among two applications that are executed on display screens of said two display means respectively, according to the direction of the flick operation, and
executing a process assigned to the operation for said particular button on the decided application.
